# EUROPÄISCHE PATENTANMELDUNG

(11) **EP 1 564 522 A2**
(43) Veröffentlichungstag der Anmeldung: **17.08.2005**
(21) Anmeldenummer: 04029784.8
(22) Anmeldetag: 16.12.2004
(51) Int. Cl.: G01B 3/18

(54) **Mikrometer**

(30) Priorität: 11.02.2004 DE 102004006672
(71) Anmelder: CARL MAHR HOLDING GMBH, 37073 Göttingen (DE)
(72) Erfinder: Seibold, Wolfgang, 72074 Tübingen (DE)
(74) Vertreter: Patentanwälte Rüger, Barthelt & Abel

(57) **Zusammenfassung**

Ein Feinmessgerät (1) zur Abstandsvermessung weist eine in einem Gehäuse gelagerte Gewinde-Messspindel, eine zur Erfassung der Drehbewegung der Messspindel (4) eingerichtete Sensoreinrichtung (52) mit einem feststehenden Sensorelement (54), das ortsfest in Bezug auf das Gehäuse (2) angeordnet ist, und einem bewegbaren Sensorelement (56), das drehfest mit der Messspindel (4) verbunden ist, wobei zwischen den beiden Sensorelementen (54,56) ein Spalt einer vorbestimmten Weite festgelegt ist, sowie eine Mitnahme- und Führungseinrichtung auf, die dazu dient, die Rotationsbewegung von der Messspindel auf das bewegbare Sensorelement (56) zu übertragen und eine relative Translationsbewegung zwischen diesen zu führen.

Gemäß der Erfindung weist die Mitnahme- und Führungseinrichtung eine mit dem bewegbaren Sensorelement (56) drehfest verbundene Führungshülse (58) mit einer sich parallel zu der Messachse erstreckenden Innennut sowie ein drehfest mit der Messspindel (4) verbundenes Führungsglied (61) auf, das in Form und Größe passend zu der Innennut gestaltet ist und verschiebbar in diese eingreift. Gemäß einem weiteren Aspekt der Erfindung ist eine Einstelleinrichtung vorgesehen, die dazu eingerichtet ist, die Weite des Spalts zwischen den Sensorelementen (54,56) bedarfsgemäß einzustellen. Das erfindungsgemäße Feinmessgerät (1) weist einen einfachen, robusten Aufbau und eine hohe Messgenauigkeit auf.

## Beschreibung

Die vorliegende Erfindung betrifft ein Feinmessgerät zur Abstandsvermessung, das insbesondere als elektronisches Mikrometer ausgebildet sein kann.

Aus der Praxis ist ein auch als Gewinde-Mikrometer oder Messschraube bezeichnetes Feinmessgerät mit einer als Gewindespindel ausgeführten Messspindel bekannt, die in eine an dem Mikrometergehäuse befestigte Einschraubhülse eingeschraubt ist. Ein kreiszylindrischer Abschnitt der Messspindel ragt aus dem Gehäuse vor und weist an seinem freien Ende eine axiale Stirnfläche auf, die als Messfläche dient. Das Gehäuse trägt einen L-förmigen Bügel, an dem ein fluchtend zu der Messspindel ausgerichteter Amboss mit einer Bezugs-Planfläche vorgesehen ist. Die Messspindel lässt sich über einen trommelartigen Griff, der an dem der Messfläche gegenüberliegenden Ende der Messspindel befestigt ist, von Hand drehen. Dadurch wird die Messspindel gleichzeitig in Richtung der Drehachse verlagert.

Das Mikrometer wird in betrieblicher Praxis und im Werkstattgebrauch zur Vermessung eines Werkstücks oder sonstigen Gegenstands, insbesondere zur Bestimmung der Dicke, Länge, des Durchmessers und eines sonstigen Abstandes zweier Flächen zueinander, verwendet. Dieser Abstand kann bspw. mit der Mess- und Bezugsfläche abgegriffen werden. Das vorbekannte Feinmessgerät weist ein elektronisches Messsystem mit einer kapazitiven Sensoreinrichtung auf, die die Drehbewegung bzw. Winkelstellung der Messspindel erfasst. Zu der Sensoreinrichtung gehört ein feststehendes Sensorelement, das an dem Gehäuse ortsfest befestigt ist und ein erstes Elektrodensystem bildet, sowie ein bewegbares Sensorelement, das an einer mit der Messspindel drehfest verbundenen Lagerhülse dem feststehenden Sensorelement gegenüber angeordnet ist und ein zweites Elektrodensystem bildet. Durch präzise gefertigte Lagersitze ist zwischen den Sensorelementen ein Spalt mit einer Weite von ca. 0,1 mm festgelegt. Je nach Winkelstellung überdecken die beiden Elektrodensysteme einander unterschiedlich, so dass aus der Differentialkapazität des so gebildeten Differentialkondensators die Winkelstellung der Messspindel bestimmt werden kann. Kapazitive Messwertaufnehmer dieser Art sind sowohl bei Längen- als auch bei Winkelmessgeräten weit verbreitet.

Um das bewegbare Sensorelement gemeinsam mit der Messspindel zu drehen und andererseits eine translatorische Relativbewegung zwischen diesen zuzulassen, ist an der Außenseite der Messspindel eine parallel zu der Drehachse verlaufende Nut eingearbeitet, die einen V-förmigen Querschnitt aufweist. In die Nut greift ein Schraubenbolzen mit einer Kegelspitze ein, der in einen Bund der Lagerhülse eingeschraubt ist, an dem das bewegbare Sensorelement bspw. durch Kleben befestigt ist.

Das vorbekannte Mikrometer hat sich in der Praxis bewährt, weist aber einige Unzulänglichkeiten auf. Bspw. ist die benötigte Spaltweite, bei der qualitativ hohe Messsignale, eine hohe Auflösung und Messgenauigkeit erhalten werden, eine Übersteuerung der Signale und damit verbundene Nichtlinearitäten aber vermieden werden, von dem jeweils verwendeten Messsystem abhängig. Für unterschiedliche Messsysteme müssen also verschiedene Lagerhülsen vorbehalten werden. Ferner können fertigungsbedingte Form- und Maßabweichungen der Lagersitze oder Toleranzen der Sensorelemente zu Messungenauigkeiten führen. An die Messgenauigkeit dieser Messgeräte werden aber hohe Ansprüche gestellt. Bei Messschrauben sollte die Messgenauigkeit bspw. unterhalb eines Mikrometers liegen.

Darüber hinaus hat sich herausgestellt, dass auch die durch die V-Nut und den Schraubenbolzen mit Kegelspitze gebildete Führungseinrichtung einen großen Einfluss auf die Messgenauigkeit hat. Fluchtungs- und Tiefenabweichungen, die sich zwangsläufig beim Einschleifen der V-Nut ergeben, führen zu Lageveränderungen der beiden Sensorelemente in Bezug aufeinander und somit zu Messfehlern. Es ist aber äußerst schwierig, auf der Mantelfläche der Messspindel eine Nut derart präzise einzuformen, dass sie exakt parallel zu der Drehachse verläuft und eine gleichbleibende Tiefe aufweist.

Außerdem müssen für das Schleifen der Nut Scheiben mit sehr kleinem Außendurchmesser verwendet werden, die folglich eine geringe Standzeit aufweisen. Dies erhöht die Werkzeugkosten und die Fertigungskosten des Mikrometers. Es wird auch als nachteilig empfunden, dass als Endanschlag für das Messbereichsende nur die Kegelspitze der Führungsschraube dienen kann, die aufgrund der Nutengeometrie sehr fein und dadurch anfällig gegen Überdrehen ist.

Ausgehend hiervon ist es Aufgabe der vorliegenden Erfindung ein Feinmessgerät zur Abstandsvermessung zu schaffen, das hohe Messgenauigkeit bietet. Insbesondere sollte das Feinmessgerät auch robust und einfach aufgebaut, kostengünstig herzustellen und leicht zu montieren sein.

Diese Aufgabe wird durch das Feinmessgerät mit den Merkmalen des Anspruches 1 bzw. 10 gelöst.

Das erfindungsgemäße Feinmessgerät zur Abstandsmessung weist eine in einem Gehäuse derart gelagerte und geführte Messspindel, dass eine bestimmte Verdrehung eine entsprechende Verschiebung der Messspindel längs einer durch die Drehachse der Messspindel festgelegten Messachse ergibt. Eine Sensoreinrichtung ist dazu eingerichtet, die Drehbewegung der Messspindel zu erfassen und weist ein feststehendes Sensorelement, das ortsfest in Bezug auf das Gehäuse angeordnet ist, sowie ein bewegbares Sensorelement auf, das drehfest mit der Messspindel verbunden ist. Zwischen dem feststehenden Sensorelement und dem bewegbaren Sensorelement ist ein Spalt einer vorbestimmten Weite festgelegt. Eine Führungseinrichtung ist dazu eingerichtet, die Rotationsbewegung der Messspindel auf das bewegbare Sensorelement zu übertragen und gleichzeitig die translatorische Bewegung der Messspindel in Bezug auf das bewegbare Sensorelement zuzulassen.

Gemäß einem Aspekt der vorliegenden Erfindung ist die Führungseinrichtung durch eine mit dem bewegbaren Sensorelement drehfest verbundene Führungshülse mit einer in der Innenwand der Führungshülse präzise eingearbeiteten Innennut, die sich parallel zu der Messachse erstreckt und eine im Wesentlichen gleichbleibende Tiefe aufweist, sowie ein mit der Messspindel drehfest verbundenes Führungsglied gebildet, das in Form und Größe passend zu der Innennut gestaltet ist und verschiebbar in die Innennut eingreift. Anders als bei dem vorbekannten Mikrometer ist bei dem erfindungsgemäßen Feinmessgerät also die Führungsnut nicht an der Mantelfläche der Messspindel, sondern an der Innenwand der die Messspindel umgebenden Führungshülse ausgebildet und das Führungsglied an der Messspindel befestigt. Durch die Verlagerung des Anlagepunktes radial nach außen in Bezug auf die Drehachse wird bei gleichem Spiel zwischen dem Führungsglied und den Nutflanken das Drehwinkelspiel zwischen dem bewegbaren Sensorelement und der Messspindel verringert. Form- und Massabweichungen der Führungsnut wirken sich also weniger stark aus als bei dem vorbekannten Mikrometer, wodurch die Messgenauigkeit des Gesamtsystems erhöht ist. Umgekehrt erlaubt eine bestimmte Genauigkeit eine höhere Toleranz bei der Fertigung der Bauteile.

Vorteilhafterweise ist die Führungseinrichtung vollständig innerhalb eines Gehäuseinnenraums untergebracht, in dem auch die Sensoreinrichtung angeordnet ist. Da dieser Innenraum durch das Gehäuse fluiddicht abschließbar ist, wird eine Beeinträchtigung der Messergebnisse durch Stab- oder Fluidpartikel, die sich in der Führungsnut einlagern könnten, vermieden. Bei einer Anordnung der Führungseinrichtung außerhalb des Gehäuses wären zusätzliche Dichtungsmittel erforderlich.

Bei einer vorteilhaften Ausführungsform der Erfindung ist das bewegbare Sensorelement unmittelbar an der Führungshülse befestigt, die dann als Lagehülse dient. An der Lagerhülse ist eine Lagerstelle ausgebildet, durch die die Lage des beweglichen Sensorelements präzise festgelegt ist.

Die Führungsnut kann in der Innenwand der Führungshülse leicht und mit großer Präzision gefertigt werden. Besonders hohe Maß- und Formgenauigkeit sowie Oberflächengüte werden erhalten, wenn die Innennut durch Räumen, also Spanen mit mehrzahnigem Werkzeug, hergestellt wird. Die Führungshülse kann in einer Werkstückaufnahme lagegenau positioniert und gehalten werden, und durch die gerade Schnittbewegung wird eine Innennut geschaffen, die sich durch sehr hohe Parallelität zur Bohrung auszeichnet. Dadurch wird eine hohe Messgenauigkeit gefördert. Die Innennut kann aber auch durch Stoßen oder ein anderes geeignetes Verfahren gefertigt werden.

Das Führungsglied bildet vorteilhafterweise auch ein Mitnahmeelement, das die Drehbewegung der Messspindel auf das bewegbare Sensorelement überträgt. Bei einer bevorzugten Ausführungsform ist das Führungsglied in Form eines an der Messspindel radial befestigten Bolzens, insbesondere eines Schraubenbolzens, gebildet. Dessen Kopf ragt über die Mantelfläche der Messspindel vor und in die Führungsnut hinein. Die Form des Bolzenkopfs ist präzise an den Verlauf der Führungsflanken bzw. Querschnitt der Führungsnut angepasst. Vorteilhaft sind bspw. eine Rechtecknut und ein kreiszylindrischer Bolzenkopf, dessen Außendurchmesser der Nutbreite entspricht. Dies ergibt beidseitig linienförmige Berührungsflächen zwischen den Nutflanken und dem Führungsglied und eine leichtgängige, präzise Führung. Hierzu sind nur einfache, kostengünstig erhältbare Mittel benötigt. Zur Erleichterung der Montage können eine Durchgangsöffnung, die radial durch die Wand der Führungshülse hindurchführt und in die Innennut einmündet, und ein abnehmbarer Gehäusedeckel vorgesehen sein, um zur Befestigung des Führungsbolzens Zugang zu der Durchgangsöffnung zu schaffen. Es sind auch andere Formen der Führungsnut und Bolzenköpfe oder auch andere Ausgestaltungen des Führungsglieds möglich.

Die erfindungsgemäße Ausgestaltung ermöglicht es, einen stabilen Endanschlag für das Messbereichsende vorzusehen, der nicht an die Nutgeometrie gebunden ist. Beispielsweise kann an einem Bund der Lagerhülse für das bewegbare Sensorelement ein Stift befestigt werden, der in die Führungsnut eingreift und am Messbereichsende mit dem Führungsglied zusammenwirkt. Ein Überdrehen ist somit nicht oder kaum möglich.

Gemäß einem weiteren Aspekt der vorliegenden Erfindung ist ein Feinmessgerät mit einer in einem Gehäuse kombiniert drehbaren und verschiebbaren Messspindel, einer zur Erfassung der Drehbewegung der Messspindel eingerichteten Sensoreinrichtung mit einem feststehenden Sensorelement und einem bewegbaren Sensorelement, die unter Ausbildung eines Spalts einander gegenüberliegend angeordnet sind, und mit einer Führungseinrichtung zur Führung der translatorischen Relativbewegung zwischen dem bewegbaren Sensorelement und der Messspindel. Erfindungsgemäß ist eine Einstelleinrichtung vorgesehen, die es ermöglicht, die Weite des Spalts, also den Abstand zwischen den Sensorelementen variabel festzulegen. Vorzugsweise ist eine weitgehende Parallelität der Sensorelemente zueinander durch lagegenau gefertigte Lagersitze vorgegeben. Mittels der Einstelleinrichtung kann aber die Spaltweite und vorzugsweise auch die Winkelstellung der Sensorelemente zueinander in einem Ausgangszustand eingestellt werden. Die Spaltweite kann bspw. abhängig von dem verwendeten Messsystem, so dass unterschiedliche Messsysteme verwendbar sind, von den Fertigungstoleranzen der Sensorelemente, so dass Fertigungsfehler ausgeglichen werden können, oder von sonstigen individuellen Erfordernissen derart festgelegt werden, dass qualitativ hochwertige Messsignale erhalten, Übersteuerungen jedoch vermieden werden. Die Messgenauigkeit wird dadurch wesentlich erhöht. Die Spaltweite lässt sich auch nachträglich, bspw. bei Verschleiß der Komponenten des Messgeräts flexibel anpassen.

In einer bevorzugten Ausführungsform sind beide Sensorelemente in Axialrichtung miteinander fluchtend und in geringem Abstands zueinander angeordnet. Mittels der Einstelleinrichtung wird der axiale Abstand zwischen den Sensorelementen variiert. Es ist aber auch eine Sensoreinrichtung mit radial zueinander ausgerichteten Sensorelementen verwendbar. In diesem Fall sollte die Einstelleinrichtung eine radiale Ausrichtung der miteinander wirkenden Sensorelemente ermöglichen.

In einer bevorzugten Ausführungsform ist die Einstelleinrichtung dem feststehenden Sensorelement zugeordnet, während die Lage des bewegbaren Sensorelements durch seinen Lagersitz definiert ist. Wenn das feststehende Sensorelement Teil eines elektronischen Messsystems bildet, das auf einer gedruckten Leiterplatte angeordnet ist, wird gleichzeitig auch die Lage der Leiterplatte mit festgelegt. Es ist aber auch möglich, eine Einstelleinrichtung allein dem bewegbaren Sensorelement oder beiden Sensorelementen zuzuordnen.

Bei einer konkreten Ausgestaltung der Erfindung sind die Sensorelemente an jeweiligen Lagerhülsen gelagert, die ringförmige axiale Lagerfortsätze aufweisen, die sich in Axialrichtung aufeinander zu erstrecken und mit ihren Stirnseiten einander berühren. Dadurch kann weitgehende Parallelität zwischen den Sensorelementen sichergestellt werden. Beide Fortsätze haben ferner den gleichen Außendurchmesser, wodurch auch eine axiale Flucht der Sensorelemente zueinander sichergestellt ist. Eines der Sensorelemente ist vorzugsweise an einem ringförmigen Träger montiert, der an der Außenseite des zugehörigen Lagerfortsatzes spielarm aber verschiebbar angeordnet ist. Der Lagerfortsatz und der Träger dienen also als Positioniereinrichtung für das Sensorelement.

Zu der Einstelleinrichtung gehört ferner eine Fixiereinrichtung, die zum Festsetzen der einmal eingestellten Lage des zugehörigen Sensorelements dient. Eine einfach gestaltete Klemmeinrichtung wird erhalten, wenn in dem oder den verschiebbaren Träger(n) eine durchgehende Bohrung, bspw. eine Gewindebohrung, ausgebildet ist, in die ein Stift, bspw. eine Gewindestift, bis zur Außenseite des zylindrischen Lagerfortsatzes eingeführt wird, um die Lage zu fixieren.

Durch die obigen erfindungsgemäßen Maßnahmen wird, jeweils für sich, die Messgenauigkeit des Feinmessgeräts wesentlich erhöht. In einer besonders bevorzugten Ausführungsform der Erfindung kommen beide Maßnahmen zur Anwendung, d.h. das Feinmessgerät weist eine Führungseinrichtung und eine Einstelleinrichtung auf, wie sie voranstehend beschrieben sind.

Das erfindungsgemäße Feinmessgerät kann als Messschraube, Gewinde-Messschraube, Feinzeiger-Rachenlehre oder entsprechendes Messinstrument ausgebildet sein. Bei einer Ausführung als elektronisches Gewinde-Mikrometer ist ein Messspindelabschnitt mit einem Außengewinde versehen, das in ein Innengewinde einer Einschraubhülse eingeschraubt ist. Die an dem Gehäuse befestigte Einschraubhülse dient vorzugsweise gleichzeitig als Lagerhülse für eines der Sensorelemente, vorzugsweise für das feststehende Sensorelement.

Das feststehende Sensorelement kann Teil eines Messsystems bilden, das Signalgebermittel und Signalaufnehmermittel aufweist, während das bewegbare Sensorelement vorzugsweise ein Codiermittel oder eine Maßverkörperung bildet, wie dies bei Messwertaufnehmern bekannt ist. Das von dem Signalgebermittel ausgesandte Signal wird durch die Maßverkörperung je nach relativer Winkelstellung zwischen den Sensorelementen unterschiedlich beeinflusst und zu dem Signalaufnehmer gekoppelt. Es ist auch möglich, eines der Sensorelemente in Form eines Signalgebers und das andere als Signalaufnehmer auszubilden. Es werden kapazitive Messsysteme, die sehr stromsparend sind und sich somit für batteriegetriebene Handmessgeräte besonders eignen, oder induktive Messsysteme, die gegen Verschmutzungen resistent sind, bevorzugt. Es sind aber auch andere, z.B. magnetoresistive oder optische Messsysteme verwendbar.

Weitere vorteilhafte Einzelheiten von Ausführungsformen der Erfindung ergeben sich aus Unteransprüchen, der Zeichnung sowie der zugehörigen Beschreibung. In der Zeichnung ist ein Ausführungsbeispiel des Gegenstandes der Erfindung dargestellt. Es zeigen:
Fig. 1 ein erfindungsgemäßes Feinmessgerät in schematisierter, perspektivischer Darstellung,
Fig. 2 einen Längsschnitt durch das erfindungsgemäße Feinmessgerät nach Fig. 1 unter Veranschaulichung der einzelnen Funktionseinheiten, zum Teil stark schematisiert,
Fig. 3 einen Querschnitt längs der Linie I-I in Fig. 2 zur Veranschaulichung der erfindungsgemäßen Führungseinrichtung, in einem anderen Maßstab,
Fig. 4 einen Ausschnitt aus Fig. 2 in einer vergrößerten Darstellung zur Veranschaulichung der erfindungsgemäßen Einstelleinrichtung,
Fig. 5 einen Querschnitt längs der Linie II-II in Fig. 4, in einer vergrößerten Darstellung, und
Fig. 6 einen der Fig. 4 entsprechenden Ausschnitt einer modifizierten Ausführungsform eines erfindungsgemäßen Feinmessgeräts in einer längsgeschnittenen Darstellung.

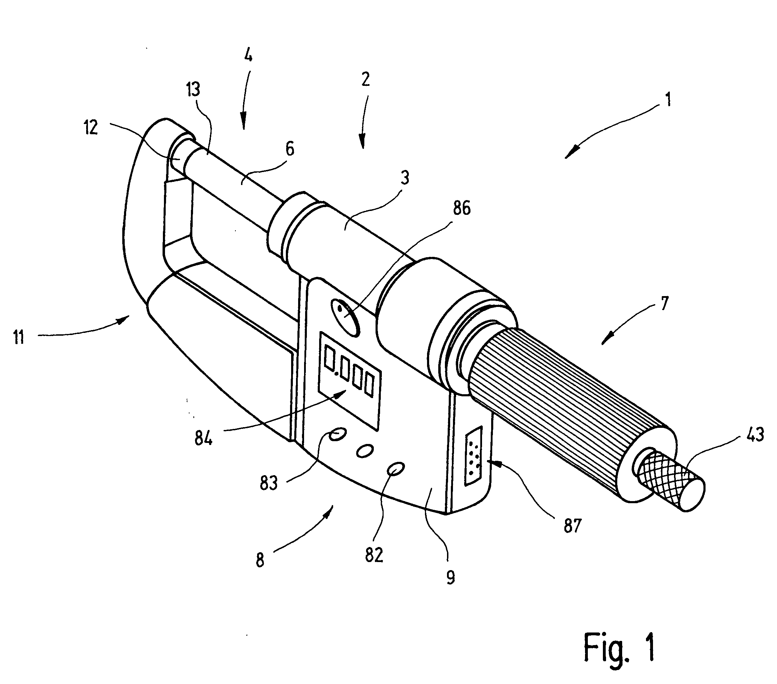

In Fig. 1 ist ein auch als Gewinde-Mikrometer oder Messschraube bezeichnetes Feinmessgerät 1 gemäß der Erfindung veranschaulicht, das ein insgesamt mit 2 bezeichnetes, bspw. aus Gussmaterial hergestelltes Gehäuse mit einem im Wesentlichen zylindrischen zentralen Gehäuseabschnitt 3 aufweist. In dem Gehäuseabschnitt 3 ist eine längliche Messspindel 4 angeordnet, deren kreiszylindrischer Abschnitt 6 in Fig. 1 links aus dem Gehäuseabschnitt 3 vorragt. An dem anderen, in Fig. 1 rechten Ende der Messspindel 4 ist ein trommelartiger Drehgriff 7 angebracht, über den die Spindel 4, wie noch nachstehend näher beschrieben ist, verdreht werden kann, wobei sie dabei längs ihrer Drehachse verlagert wird. Wie aus Fig. 1 ferner hervorgeht, weist das Gehäuse 2 unterhalb des zylindrischen Abschnitts 3 einen im Wesentlichen kastenförmigen Grundkörper 8, der von einem abnehmbaren Gehäusedeckel 9 fluiddicht verschlossen ist, sowie einen an dem Grundkörper 8 ausgebildeten haken- oder L-förmigen Bügel 11 auf, der an seinem nach oben ragenden freien Ende einen fluchtend mit dem Spindelabschnitt 6 angeordneten Amboss 12 trägt.

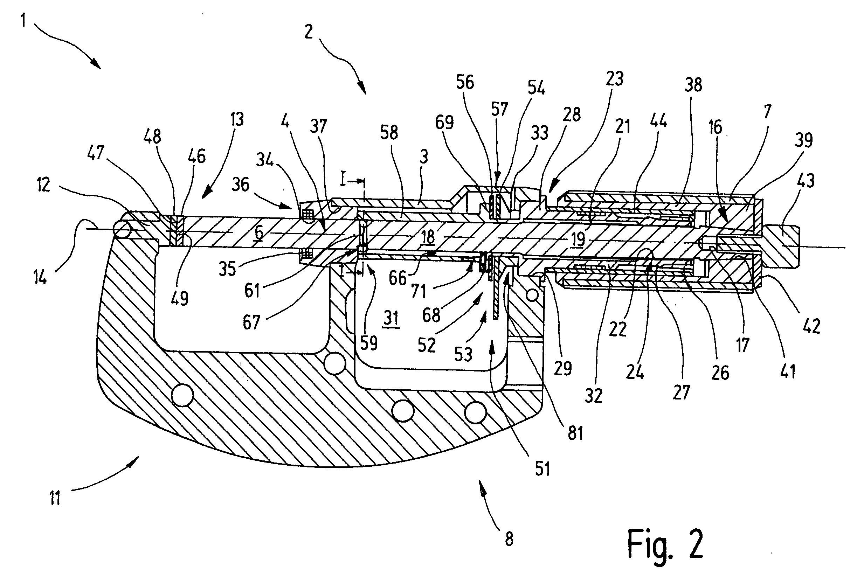

Die Messspindel 4 und weitere Funktionsteile sind im Einzelnen aus Fig. 2 ersichtlich, die einen Längsschnitt durch das erfindungsgemäße Feinmessgerät 1 zeigt. Wie zu erkennen, erstreckt sich die Messspindel 4 ausgehend von ihrem in Fig. 2 an dem Amboss 12 anliegenden Ende 13 längs ihrer Drehachse 14 durch das Gehäuse 2 hindurch, bis zu ihrem anderen Ende 16. Das Spindelende 16 ist zur Befestigung des Griffs 7 kegelstumpfförmig ausgebildet und mit einer Sackbohrung 17 versehen, die in der axialen Stirnfläche eingearbeitet ist. Die Messspindel 4 weist im Anschluss an den Abschnitt 6 einen ebenfalls zylindrischen mittleren Abschnitt 18, der hier innerhalb des Gehäuseabschnitts 3 liegt, sowie zwischen dem mittleren Abschnitt 18 und dem konischen Ende 16 einen Gewindeabschnitt 19 auf, der ein mit hoher Präzision hergestelltes Außengewinde 21 trägt.

Das Außengewinde 21 greift in ein passend zu diesem gestaltetes Innengewinde 22 einer an dem Gehäuse 2 befestigten, nach außen ragenden Einschraubhülse 23 ein. Das Innengewinde 22 ist nur in einem von dem Gehäuse 2 entfernt liegenden Endabschnitt 24 vorgesehen. Die Steigung der Gewinde 21 und 22 bestimmt den Längsvorschub der Messspindel 4 pro Umdrehung. Auf den Endabschnitt 24 kann eine Einstellmutter 26 aufgeschraubt sein, mit der die Eingriffskraft der Gewinde 21, 22 derart einstellbar ist, dass Gewindespiele weitgehend beseitigt sind und dennoch eine leichtgängige Drehung der Messspindel 4 in Bezug auf die Einschraubhülse 23 möglich ist.

Die Einschraubhülse 23 ist mit einem Befestigungsflansch 28 in einer Öffnung 29 des Gehäuses 2 befestigt. Zwischen dem Befestigungsflansch 28 und dem Endabschnitt 24 weist die Einschraubhülse 23 einen Abschnitt 32 auf, dessen Innendurchmesser größer ist als der Außendurchmesser des Außengewindes 21 der Messspindel 4. An dem Befestigungsflansch 28 ist ferner ein sich in den Innenraum 31 des Gehäuses 2 hinein axial erstreckender ringförmiger Fortsatz 33 ausgebildet, dessen Außendurchmesser kleiner ist als der des Befestigungsflansches und dessen Innendurchmesser dem Außendurchmesser der Abschnitte 6, 18 der Messspindel 4 entspricht. Diese ist folglich durch den Fortsatz 33 spielarm und gleitbar gelagert und geführt. Die Messspindel 4 ist ferner in der Innenbohrung 34 einer Lagerbuchse 36 spielarm und gleitbar gelagert, die in einer der Öffnung 29 gegenüberliegenden Öffnung 37 des Gehäuses 2 eingesetzt ist. Die Lagerbuchse 34 ist vorzugsweise in der Öffnung 37 eingeklebt und weist eine Dichtung 35 auf, die die Messspindel 4 umgibt, um gemeinsam mit Dichtmitteln für den Gehäusedeckel 9 und gegebenenfalls für ein Batteriefach sowie mit den präzise passenden Gewinden 21, 22 den Innenraum 18 fluiddicht abzudichten.

Wie bereits erwähnt, lasst sich die Messspindel 4 mittels des Griffs 7 ein- und ausschrauben. Der hier als Kunststofftrommel gefertigte Griff 7 ist über eine Reibhülse 38 aufgezogen und mit dieser reibschlüssig verbunden. Die Reibhülse 38 weist an ihrem axial äußeren Ende eine Einschnürung 39 mit einer konischen Bohrung 41 auf, die in Form und Größe dem kegelstumpfförmigen Spindelende 16 entspricht und auf diesem unter Bildung eines Reibschlusses aufsitzt. Der Kunststoffring 7 und die Reibhülse 38 sind in Axialrichtung durch eine Abdeckscheibe 42 und eine Verstellschraube 43 gesichert, die durch eine Zentralbohrung der Abdeckscheibe 42 hindurch in der Sackbohrung 17 eingeschraubt ist. Die Verstellschraube 43 ist auch zur Schnellverstellung der Messspindel 4 verwendbar, da ihr Außendurchmesser kleiner ist als der des Griffs 7. Die Reibhülse 38 ist über einer Hülse 44 drehbar angeordnet, die an dem Befestigungsflansch 28 der Einschraubhülse 23 befestigt ist und sich längs der Abschnitte 32, 24 erstreckt.

Das Feinmessgerät 1 dient dazu, Abstände von Flächen zueinander, wie z.B. Dicken, Längen, Durchmesser oder andere Maße von Werkstücken oder sonstigen Gegenständen zu vermessen. Hierzu ist an der axialen Stirnseite des Spindelabschnitts 6 eine Messscheibe 46 aus einem verschleißfesten Material befestigt, die eine senkrecht zu der Messachse 14 ausgerichtete Planfläche 47 aufweist, die als Messfläche dient. An dem als Wiederlagerbolzen dienenden Amboss 12 ist ebenfalls eine verschleißfeste Scheibe 48 mit einer kreisförmigen ebenen Bezugsfläche 49 befestigt, die in Richtung auf die Messfläche 47 weist und parallel zu dieser ausgerichtet ist.

Zur Bestimmung des Abstands zwischen der Bezugsfläche 49 und der Messfläche 47 ist ein insgesamt mit 51 bezeichnetes Messsystem vorgesehen, das in dem Innenraum 31 angeordnet ist. Zu dem Messsystem 51 gehört eine Sensoreinrichtung 52, die die relative Winkelstellung oder Drehbewegung der Messspindel 4 erfasst, sowie eine Ansteuer- und Auswerteeinrichtung 53, die die Sensoreinrichtung 52 ansteuert und die von dieser generierten Messsignale auswertet, um den gesuchten Abstand zu bestimmen. Die Sensoreinrichtung 52 und die Ansteuer- und Auswerteeinrichtung 53 sind in Fig. 2 nicht im Detail veranschaulicht. Wie aber zu erkennen ist, gehören zu der Sensoreinrichtung 52 ein feststehendes Sensorelement 54, das ortsfest im Bezug auf das Gehäuse 2 angeordnet ist, und ein bewegbares Sensorelement 56, das gemeinsam mit der Messspindel 4 rotiert.

Im vorliegenden Fall ist eine kapazitive Sensoreinrichtung 52 vorgesehen. Das feststehende Sensorelement 54 weist bspw. mehrere, hier nicht näher veranschaulichte Sendeelektroden in Form von Kapazitätsbelägen, die auf der zu dem bewegbaren Sensorelement 56 weisenden Fläche auf einem Kreisring angeordnet und segmentartig gestaltet sind. Um die Sendeelektroden herum sind mehrere Empfangselektroden vorgesehen, die ebenfalls die Form von Kreisringsegmenten aufweisen. Das bewegbare Sensorelement 56 ist als Maßverkörperung oder Codiermittel ausgebildet und weist auf der zu dem feststeheden Sensorelement 54 weisenden Fläche mehrere ebenfalls kreisringsegmentförmige Gegenelektroden auf, die im Abstand zu den Sende- und Empfangselektroden angeordnet sind. Zwischen den Sensorelementen 54, 56 ist ein gleichmäßiger, ringförmiger Spalt 57 festgelegt, der hier eine Weite von ca. 0,1 mm aufweist. Auf bekannte Weise werden den Sendeelektroden zugeführte Ansteuersignale durch die Gegenelektroden des bewegbaren Sensorelements 56 auf die Empfangselektroden kapazitiv gekoppelt, wobei sie je nach Grad der Überlagerung zwischen den Gegenelektroden und den Sende- bzw. Empfangselektroden unterschiedlich beeinflusst oder kodiert werden. Die Messsignale enthalten also eine Information über die relative Winkelstellung der Messspindel 4. Die Auswerteeinrichtung 53 extrahiert diese Information und bestimmt unter Berücksichtigung der Anzahl und Richtung der Drehumläufe der Messspindel 4 und der Spindelgewindesteigung den gesuchten Abstand. Kapazitive Messsysteme der hier kurz erläuterten Art sind aus dem Stand der Technik allgemein bekannt. Ein Beispiel für ein bevorzugtes kapazitives Messsystem, das ohne Weiteres als relatives Messsystem ausgeführt sein kann und eine vorteilhafte stromsparende Ansteuer- und Auswerteschaltung aufweist, ist im Detail in der DE 100 351 92 C1 beschrieben, auf die Bezug genommen wird.

Die Art des Messsystems ist aber für die vorliegende Erfindung nicht von ausschlaggebender Bedeutung. Wichtig ist nur, dass das zur Erfassung der Winkelstellung oder -geschwindigkeit der Messspindel geeignete Messsystem ein mit der Messspindel 4 umlaufendes Sensorelement 56 und ein feststehendes Sensorelement 54 aufweist, die einander in einem vorbestimmten Abstand gegenüberliegen. Es sind bspw. auch induktive Messsysteme verwendbar, bei denen das von Sendewicklungen erzeugte Magnetfeld durch die Maßverkörperung beeinflusst und von Empfangswicklungen erfasst wird. Bevorzugte Formen von induktiven Messsystemen sind in der EP 0 785 415 B1, EP 0 182 085 B1 oder DE 197 199 05 A1 offenbart.

Das bewegbare Sensorelement 56 ist an einer Lagerhülse 58 befestigt, die die Messspindel 4 spielarm aber verschiebbar umgreift. Die Lagerhülse 58 erstreckt sich von der Lagerbuchse 56 bis zu dem Fortsatz 33 der Einschraubhülse 23. Vorzugsweise ist die Länge der Lagerbuchse 58 derart bemessen, dass ihre axialen Stirnflächen mit den axialen Stirnflächen der Lagerbuchse 36 und des axialen Fortsatzes 33 in Berührung stehen, um in axialer Richtung fixiert zu sein. Dadurch ist auch die Position des bewegbaren Sensorelements 56 festgelegt.

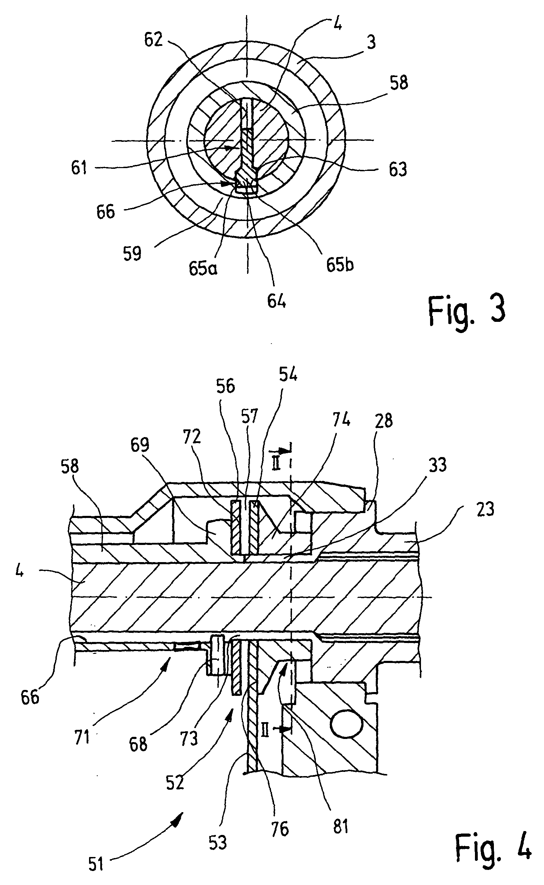

Um einerseits die Rotationsbewegung von der Messspindel 4 auf die Lagerbuchse 58 zu übertragen, andererseits aber eine relative Translationsbewegung zwischen diesen zuzulassen, ist eine insgesamt mit 59 bezeichnete Mitnahme- und Führungseinrichtung vorgesehen, die in den Fig. 2 und 3 veranschaulicht ist. Zu dieser gehört ein Sicherungsbolzen 61, der in einer mit einem Gewinde versehenen Radialbohrung 62 eingeschraubt ist, die senkrecht die Drehachse 14 schneidend durch den zylindrischen Abschnitt 18 der Messspindel 4 hindurchführt. An der Mündungsstelle zur Mantelfläche des Abschnitts 18 ist die Radialbohrung 62 zu einer Senköffnung 63 erweitert, in die der zylindrische Kopf 64 des Bolzens 61 teilweise einfindet. Der Bolzenkopf 64 ragt aber zum großen Teil in radialer Richtung über die Oberfläche der Messspindel 4 vor und in eine Innennut 66 hinein, die in der Lagerhülse 58 ausgebildet ist. Die Nut 66 weist vorliegendenfalls einen rechteckigen Querschnitt 66 und erstreckt sich über die gesamte Länge der Lagerhülse 58 hinweg, parallel zu der Drehachse 14. Der Außendurchmesser des Bolzenkopfs 64 entspricht präzise-der Breite der Nut 66, so dass an den Nutflanken 65a, 65b eine linienförmige Berührung erzeugt wird. Um die erforderliche Form- und Maßgenauigkeit zu erreichen, ist die Innennut 66 vorzugsweise durch Räumen gefertigt.

Der Sicherungsbolzen 61 und die Radialbohrung 62 sind in Axialrichtung derart positioniert, dass der Bolzenkopf 64 gegen die in den Innenraum 31 ragende ringförmige Stirnfläche der Lagerbuchse 36, die einen ersten Anschlag 67 bildet, in Anlage kommt, wenn sich die Messfläche 47 und die Bezugsfläche 49 berühren. Ein zweiter Anschlag 68, der das Messbereichsende kennzeichnet, ist durch einen Stift 68 gebildet, der in radialer Richtung durch einen Radialflansch 69 der Lagerhülse 58 hindurch, bis in unmittelbare Nähe der Mantelfläche der Messspindel 4 in die Führungsnut 66 hineinragt (vgl. auch Fig. 4). In der Nähe des Radialflansches 69 ist in der Wand der Hülse 58 eine Öffnung 71 ausgebildet, die einen Zugang zu der Messspindel 4 bietet. Der Radialflansch 69 dient gleichzeitig als Lagersitz für das bewegbare Sensorelement 56 und weist hierzu eine senkrecht zu der Messachse 14, präzise gefertigte Anlagefläche 72 auf, an der das Sensorelement 56 befestigt ist. Die radiale Position des Sensorelements 56 ist durch einen ringförmigen Axialvorsprung 73 vorgegeben, der aus dem Radialflansch 69 in Richtung auf den Fortsatz 33 der Einschraubhülse 23 vor und mit diesem in Berührung steht. Die Außendurchmesser der Axialfortsätze 33, 73 stimmen miteinander überein.

Wie in Fig. 4 vergrößert dargestellt, ist an der zylindrischen Außenseite des Fortsatzes 33 ein Lagerring 74 angeordnet, dessen Breite in Axialrichtung kleiner ist, als die Axialerstreckung des Fortsatzes 33 und dessen Innendurchmesser dem Außendurchmesser des Fortsatzes 33 im Wesentlichen entspricht, so dass der Lagerring 74 spielarm aber verschiebbar auf dem Fortsatz 33 sitzt. Der Lagerring 74 weist eine axiale Stirnfläche 76 auf, die exakt parallel zu der Lagerfläche 72 ausgerichtet ist und an der das feststehende Sensorelement 54 und eine Leiterplatte mit der Ansteuer- und Auswerteeinrichtung 53 befestigt sind.

Zur Festlegung der Lage des Lagerrings 74 ist eine Fixiereinrichtung 77 vorgesehen, die hier ein Festklemmen des Lagerrings 74 an dem zylindrischen Fortsatz 33 ermöglicht. Zu der Fixier- oder Klemmeinrichtung 77 gehört eine durch die Wand des Lagerrings 74 hindurchführende Radialbohrung 78 mit einem Innengewinde sowie ein Schraubenbolzen 79, der in die Bohrung 78 eingeschraubt ist, bis er mit der Außenseite des Fortsatzes 33 in Anlage kommt und eine ausreichende Druckkraft ausgeübt, um den Lagerring 74 sicher zu halten.

Das insoweit beschriebene Feinmessgerät 1 lässt sich, weil es relativ wenige Elemente aufweist, sehr schnell und einfach zusammenbauen. Beispielsweise kann nach Befestigung der Einschraubhülse 23 an dem Gehäuse 2 der Lagerring 74 auf den axialen Fortsatz 33 aufgeschoben und anschließend die Messspindel 4 durch das axiale Ende 24 der Einschraubhülse 23 hindurch soweit eingeführt werden, bis ihr vorderes axiales Ende 13 in den Innenraum 31 eintaucht. Anschließend wird die Lagerhülse 58 mit dem bewegbaren Sensorelement 56 auf das vordere Ende 13 der Messspindel aufgesteckt und die Messspindel soweit vorgeschoben und ausgerichtet, dass die Radialbohrung 62 und die Führungsnut 66 der Durchgangsöffnung 71 gegenüber liegen. Anschließend kann durch die Durchgangsöffnung 71 hindurch der Sicherungsbolzen 61 in die Bohrung 62 eingeschraubt werden. Danach wird die Messspindel 4 durch die Lagerbohrung der Lagerbuchse 36 hindurchgeführt, wobei dabei ihr Außengewinde 21 mit dem Innengewinde 22 der Einschraubhülse 23 in Eingriff kommt. Die Messspindel 4 kann dann soweit eingeschraubt werden, bis ihre Messfläche 47 mit der Bezugsfläche 49 in Anlage kommt.

Ein wesentlicher Vorteil ist, dass die Sensorelemente 54, 56 bedarfsgemäß zueinander ausgerichtet werden können. Die mit hoher Präzision gefertigten Lagersitze 33, 76 sowie 72, 73 stellen bereits eine Parallelität zwischen den Sensorelementen 54, 56 sicher. Die durch den Lagerfortsatz 33, den Lagerring 74 und die Fixiereinrichtung 77 gebildete Einstelleinrichtung 81 ermöglicht zusätzlich, sowohl die Winkellage als auch den Abstand der Sensorelemente zueinander gemäß den Anforderungen, bspw. der Spezifikation des jeweils verwendeten Messsystems einzustellen. Es sind unterschiedliche Messsysteme ohne Konfigurationsänderung verwendbar. Außerdem kann der Spalt 57 auch an die Fertigungstoleranzen individuell angepasst oder im Gebrauch nachjustiert werden. Der Lagerring 74 wird einfach an dem Fortsatz 33 in die erforderliche Lage verschoben und darin durch Festziehen der Schraube 79 festgesetzt. Die erforderliche Spaltweite kann vorgegeben sein oder bspw. durch Vermessen eines Referenzobjekts festgelegt werden. Es ist auch möglich, von der Leiterplatte 53 Messsignale abzugreifen und aufgrund qualitativer Aussagen die erforderliche Spaltweite zu bestimmen. Jedenfalls ermöglicht Einstelleinrichtung 81 eine flexible Anpassung der Spaltweite, derart, dass stets hohe Messgenauigkeit sichergestellt ist.

Das Feinmessgerät 1 funktioniert wie folgt:

Es wird von dem in Fig. 1 und 2 veranschaulichten Ausgangszustand ausgegangen, bei dem die Messfläche 47 an der Bezugsfläche 49 anliegt. Das Messgerät 1 kann über einen in Fig. 1 beispielhaft eingezeichneten Einschaltknopf 82 eingeschaltet werden oder auch eine Aufweckschaltung enthalten, die das Messsystem 51 aktiviert, sobald der Griff 7 betätigt wird. Außerdem enthält das Feinmessgerät 1 einen Rücksetz-Knopf 83 zum Rücksetzen des Messsystems 51 und Nullsetzen einer Anzeige, bspw. eines Displays 84, auf dem der Abstand in Millimetern angezeigt wird. Wird anschließend die Messspindel mit Hilfe des Griffs 77 oder der Schnellverstellschraube 43 gedreht, erfasst die Sensoreinrichtung 52 die Winkelstellung der Messspindel 4 auf die oben beschriebene Weise. Die Auswerteeinrichtung 53 bewertet die von der Sensoreinrichtung 52 gelieferten Messsignale und bestimmt daraus den Abstand zwischen der Messfläche 47 und der Bezugsfläche 49, mit denen ein Maß, bspw. die Dicke oder Länge eines Werkstücks abgegriffen wird. In Fig. 1 ist ferner ein Schwenkglied 86 veranschaulicht, mit dem eine hier nicht näher veranschaulichte Feststelleinrichtung aktivierbar ist, um das abgegriffene Maß zu fixieren und eine weitere Verstellung der Messspindel 4 zu verhindern. Die ermittelte Abstandsgröße wird auf dem Display 84 angezeigt und kann über einen Datenausgang 87 bspw. einem Computer oder dgl. zugeführt werden. Über den Datenausgang können gegebenenfalls auch andere Signale, z.B. die Messsignale übertragen werden.

Beim Drehen der Messspindel 4 wird diese gleichzeitig in Axialrichtung, also in Richtung ihrer Drehachse 14, verlagert. Der Sicherungsbolzen 61 wirkt dabei mit seinem Kopf 64 auf eine der Nutflanken 65a bzw. 65b, wodurch die Lagehülse 58 mit dem bewegbaren Sensorelement gemeinsam mit der Messspindel 4 winkeltreu in Drehbewegung versetzt bzw. gehalten wird. Eine axiale Verlagerung der Lagerbuchse 58 ist durch die Gleitberührung der Stirnflächen des Fortsatzes 33 und der Lagerbuchse 36 verhindert. Der zu der Führungsnut 66 präzise passende Bolzenkopf 64 gleitet längs der Nutflanken 65a, 65b entlang, ohne dass ein die Messgenauigkeit beeinträchtigendes Spiel vorgesehen ist und ohne die Leichtgängigkeit einzuschränken. Vorteilhafterweise ist die Führungseinrichtung 59 im Bereich des mittleren Spindelabschnitts 18, also vollständig in dem fluiddicht abgeschlossenen Innenraum 31 des Gehäuses 2 angeordnet, so dass abgesehen von den bereits erwähnten Dichtungsmitteln keine zusätzlichen Dichtungen für die Führungseinrichtung 59 vorgesehen werden müssen. Jedenfalls können Staub und Fluidpartikel die Führung nicht beeinträchtigen. Die präzise Mitnahme und Führung durch die Einrichtung 59 und ein für die Erfassung exakt eingestellter Spalt 57 bilden die Grundlage für eine Messung mit hoher Genauigkeit.

Vorteilhaft ist ferner, dass mit dem Stift 68 ein stabiler Anschlag geschaffen ist, mit dem der Bolzenkopf 64 in Eingriff kommt, wenn das Messbereichsende erreicht ist. Der Stift 68 ist von der Geometrie der Nut 66 unabhängig und weist eine ausreichende Dicke und Festigkeit auf, um ein Überdrehen wirksam zu verhindern. In der anderen Richtung verhindert der Anschlag 67, also die Stirnseite der Lagerbuchse 36 eine Beschädigung der Mess- bzw. Bezugsfläche 47 bzw. 49. In dem Griff 7 kann aber auch zusätzlich eine nach Art einer Ratsche gebildete Vorrichtung zum Schutz gegen Überdrehen vorgesehen sein.

Im Rahmen der Erfindung sind zahlreiche Modifikationen möglich. Wie bereits erwähnt, kann statt eines kapazitiven insbesondere auch ein induktives Messsystem eingesetzt werden. Das Feinmessgerät 1 ist vorzugsweise als batteriegetriebenes handbetätigtes Messgerät ausgebildet, kann aber auch in eine Messmaschine mit einer von der hier veranschaulichten unterschiedlichen Gehäuseform integriert sein. Die Messspindel 4 kann auch motorisch und bspw. über ein Getriebemittel angetrieben sein. Die Mess- bzw. Bezugsflächen 47, 49 können je nach Messzweck kugel- oder kegelförmig gestaltet oder zur Aufnahme geeigneter Messeinsätze eingerichtet sein. Ferner kann der Bolzen 61 auch durch ein anders gestaltetes Führungsglied ersetzt oder der Bolzenkopf eine polygonale oder andere Form aufweisen, wenn eine spielarme Drehmitnahme und Relativverschiebung zwischen den Elementen 4, 58 ermöglicht ist. Die hier beschriebene Ausführungsform einer Führungseinrichtung 59 zeichnet sich aber dadurch aus, dass sie lediglich mit einfachen Mitteln und Maßnahmen zu einer Erhöhung der Messgenauigkeit beiträgt. Dies gilt auch in Bezug auf die Einstelleinrichtung 81, die hier ebenfalls besonders einfache ausgebildet und handhabbar ist.

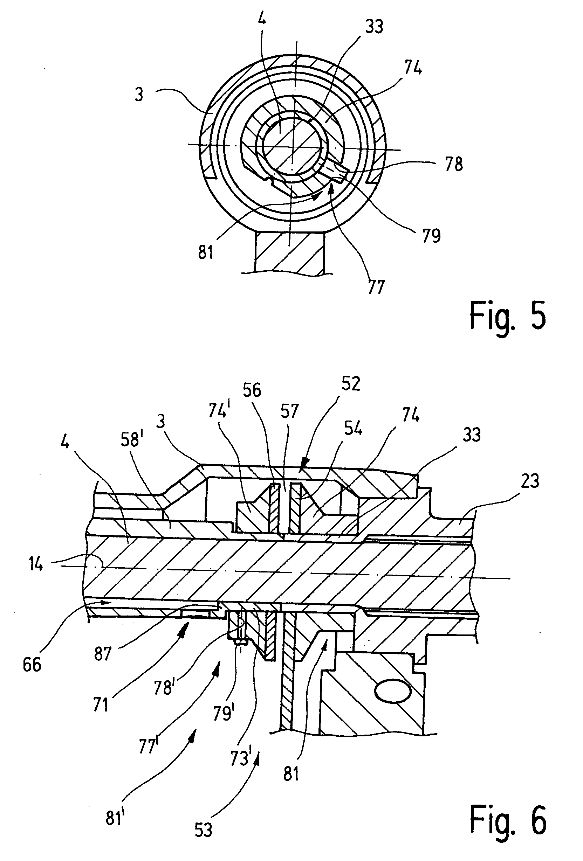

In Fig. 6 ist eine der Fig. 3 ähnliche Schnittansicht veranschaulicht, die einen Ausschnitt einer modifizierten Ausführungsform der Erfindung zeigt. Soweit Übereinstimmungen mit den vorstehend beschriebenen Messgerät in Bau und/oder Funktion bestehen, wird unter Zugrundelegung gleicher Bezugszeichen auf die vorstehende Beschreibung verwiesen.

Das in Fig. 6 veranschaulichte Ausführungsbeispiel unterscheidet sich von dem in Fig. 1 bis 5 veranschaulichten lediglich dadurch, dass hier beide Sensorelemente 54, 56 längs der Messachse 14 verstellbar angeordnet sind. Während der Lagerring 74 des feststehenden Sensorelements 54 an dem axialen Fortsatz 33 der Einschraubhülse 23 in seiner Axial- und Drehlage durch die Einstelleinrichtung 81 fixierbar ist, ist nun auch dem bewegbaren Sensorelement 56 eine entsprechende Einstelleinrichtung 81' zugeordnet. Das Sensorelement 56 ist an einem Lagerring 74' befestigt, der spielarm und verschiebbar auf dem axialen Fortsatz 73' der Lagerhülse 58' sitzt. Der axiale Fortsatz 73' ist gegenüber dem Fortsatz 73 in Fig. 2 und 3 in axialer Richtung verlängert, und der ringförmige Radialflansch 69 ist entfernt. Die Führungsnut 66 ist nur bis zur Höhe der Durchgangsöffnung 71 ausgebildet, und ihr Ende definiert eine Stufe 88, die als Anschlag für den Bolzenkopf 64 beim Erreichen des Messbereichsendes dient. Der Fortsatz 73' erstreckt sich von der Stufe 88 aus axial bis zu dem Fortsatz 33 und weist einen gleichen Außendurchmesser wie dieser auf. Die Einstelleinrichtung 81' ist hier entsprechend der Einstelleinrichtung 81 mit einer Klemmeinrichtung 77' ausgebildet. Diese weist eine Radialbohrung 78' in dem Lagerring 74' und einen Schraubenbolzen 79' auf, der bis zu der Außenumfangsfläche des Fortsatzes 73' einschraubbar ist. Die Ausführungsform nach Fig. 6 bietet insofern mehr Flexibilität, als sie auf einfache Weise ein Anbringen und Austauschen eines beliebigen Sensorelements 54 bzw. 56 und eine Anpassung an unterschiedlichste Messsysteme ermöglicht. Es versteht sich, dass auch Ausführungsformen möglich sind, bei denen nur das bewegbare Sensorelement 56 in seiner Lage einstellbar ist, während das feststehende Sensorelement 54 bspw. an der Einschraubhülse 23 starr befestigt sein kann.

Ein Feinmessgerät 1 zur Abstandsvermessung weist eine in einem Gehäuse 2 gelagerte Gewinde-Messspindel 4, eine zur Erfassung der Drehbewegung der Messspindel 4 eingerichtete Sensoreinrichtung 52 mit einem feststehenden Sensorelement 54, das ortsfest in Bezug auf das Gehäuse angeordnet ist, und einem bewegbaren Sensorelement 56, das drehfest mit der Messspindel verbunden ist, wobei zwischen den beiden Sensorelementen 54, 56 ein Spalt einer vorbestimmten Weite festgelegt ist, sowie eine Mitnahme- und Führungseinrichtung 59 auf, die dazu dient, die Rotationsbewegung von der Messspindel 4 auf das bewegbare Sensorelement 56 zu übertragen und eine relative Translationsbewegung zwischen diesen zu führen.

Gemäß der Erfindung weist die Mitnahme- und Führungseinrichtung 59 eine mit dem bewegbaren Sensorelement 56 drehfest verbundene Führungshülse 58 mit einer sich parallel zu der Messachse erstreckenden Innennut 66 sowie ein drehfest mit der Messspindel 4 verbundenes Führungsglied 61 auf, das in Form und Größe passend zu der Innennut 66 gestaltet ist und verschiebbar in diese eingreift. Gemäß einem weiteren Aspekt der Erfindung ist eine Einstelleinrichtung 81 vorgesehen, die dazu eingerichtet ist, die Weite des Spalts zwischen den Sensorelementen 54, 56 bedarfsgemäß einzustellen. Das erfindungsgemäße Feinmessgerät 1 weist einen einfachen, robusten Aufbau und eine hohe Messgenauigkeit auf.

## Patentansprüche

1. Feinmessgerät zur Abstandsvermessung, insbesondere elektronisches Mikrometer,
mit einem Gehäuse (2), das eine Messachse (14) definiert,
mit einer in dem Gehäuse (2) derart drehbar und verschiebbar gelagerten Messspindel (4), dass eine bestimmte Drehbewegung der Messspindel (4) eine entsprechende Verschiebung der Messspindel (4) längs der Messachse (14) ergibt,
mit einer zur Erfassung der Drehbewegung der Messspindel (4) eingerichteten Sensoreinrichtung (52), die ein feststehendes Sensorelement (54), das ortsfest in Bezug auf das Gehäuse (2) angeordnet ist, und ein bewegbares Sensorelement (56) aufweist, das drehfest mit der Messspindel (4) verbunden und relativ zu dieser längs der Messachse (14) verschiebbar ist, wobei zwischen dem feststehenden Sensorelement (54) und dem bewegbaren Sensorelement (56) ein Spalt (57) einer vorbestimmten Weite festgelegt ist,
mit einer Führungseinrichtung (59) zur Führung der relativen Verschiebebewegung zwischen dem bewegbaren Sensorelement (56) und der Messspindel (4), wobei zu der Führungseinrichtung (59) eine mit dem bewegbaren Sensorelement (56) drehfest verbundene Führungshülse (58) mit einer Innennut (66), die sich parallel zu der Messsachse (14) erstreckt, und ein mit der Messspindel (4) drehfest verbundenes Führungsglied (61) gehören, das verschiebbar in die Innennut (66) eingreift.

2. Feinmessgerät nach Anspruch 1, **dadurch gekennzeichnet, dass** die Führungseinrichtung (59) auch als Mitnahmeeinrichtung eingerichtet ist, um bei einer Drehbewegung der Messspindel (4) das bewegbare Sensorelement (56) mitzudrehen.

3. Feinmessgerät nach Anspruch 1, **dadurch gekennzeichnet, dass** die Führungseinrichtung (59) vollständig innerhalb eines Innenraums (31) untergebracht ist, der durch ein dichtend abschließbares Gehäuse (2) umgrenzt ist und in dem die Sensoreinrichtung (52) angeordnet ist.

4. Feinmessgerät nach Anspruch 1, **dadurch gekennzeichnet, dass** die Führungshülse (58) die das bewegbare Sensorelement (56) unmittelbar tragende Lagerhülse bildet.

5. Feinmessgerät nach Anspruch 1, **dadurch gekennzeichnet, dass** die Innennut (66) durch Räumen in der Innenwand der Führungshülse (58) eingearbeitet ist.

6. Feinmessgerät nach Anspruch 1, **dadurch gekennzeichnet, dass** die Innennut (66) eine Rechtecknut ist.

7. Feinmessgerät nach Anspruch 1, **dadurch gekennzeichnet, dass** in der Führungshülse (58) eine radiale Durchgangsöffnung (71) vorgesehen ist, die in die Innennut (66) mündet.

8. Feinmessgerät nach Anspruch 1, **dadurch gekennzeichnet, dass** das Führungsglied (61) durch einen an der Messspindel (4) befestigten Bolzen, insbesondere einen Schraubenbolzen (61), gebildet ist, der in Radialrichtung über die Mantelfläche der Messspindel (4) vorragt und einen zu der Führungsnut (66) präzise passenden Kopf (64) aufweist.

9. Feinmessgerät nach Anspruch 1, **dadurch gekennzeichnet, dass** dem Führungsglied (61) ein Endanschlag zugeordnet ist, der in Form eines in der Nähe des bewegbaren Sensorelements (56) durch die Führungshülse (58) hindurch in die Führungsnut (66) hinein ragenden Stifts (68) gebildet ist.

10. Feinmessgerät zur Abstandsvermessung, insbesondere elektronisches Mikrometer,
mit einem Gehäuse (2), das eine Messachse (14) definiert,
mit einer in dem Gehäuse (2) derart drehbar und verschiebbar gelagerten Messspindel (4), dass eine bestimmte Drehbewegung der Messspindel (4) eine entsprechende Verschiebung der Messspindel (4) längs der Messachse (14) ergibt,
mit einer zur Erfassung der Drehbewegung der Messspindel (4) eingerichteten Sensoreinrichtung (52), die ein feststehendes Sensorelement (54), das ortsfest in Bezug auf das Gehäuse (2) angeordnet ist, und ein bewegbares Sensorelement (56) aufweist, das drehfest mit der Messspindel (4) verbunden und relativ zu dieser längs der Messachse (14) verschiebbar ist, wobei zwischen dem feststehenden Sensorelement (54) und dem bewegbaren Sensorelement (56) ein Spalt (57) einer vorbestimmten Weite festgelegt ist,
mit einer Führungseinrichtung (59) zur Führung der relativen Verschiebebewegung zwischen dem bewegbaren Sensorelement (56) und der Messspindel (4) und
mit einer Einstelleinrichtung (81, 81') zum variablen Einstellen der Weite des Spalts (57) zwischen dem feststehenden Sensorelement (54) und dem bewegbaren Sensorelement (56).

11. Feinmessgerät nach Anspruch 10, **dadurch gekennzeichnet, dass** das bewegbare Sensorelement (56) und das feststehende Sensorelement (54) in Axialrichtung in geringem Abstand einander gegenüberliegend angeordnet sind.

12. Feinmessgerät nach Anspruch 10, **dadurch gekennzeichnet, dass** die Einstelleinrichtung (81) dem feststehenden Sensorelement (54) zugeordnet ist.

13. Feinmessgerät nach Anspruch 10, **dadurch gekennzeichnet, dass** die Sensorelemente (54, 56) an Lagerhülsen (23, 58) gelagert sind, die ringförmige axiale Lagerfortsätze (33, 73, 73') aufweisen, die im Wesentlichen gleichen Außendurchmesser aufweisen, sich in Axialrichtung aufeinander zu erstrecken und mit ihren Stirnseiten einander berühren.

14. Feinmessgerät nach Anspruch 13, **dadurch gekennzeichnet, dass** wenigstens eines der Sensorelemente (54, 56) an einem ringförmigen Träger (75, 75') befestigt ist, der den ringförmigen Lagerfortsatz (33, 73') der zugehörigen Lagerhülse (23, 58) konzentrisch umgreift und auf diesem verschiebbar angeordnet ist.

15. Feinmessgerät nach Anspruch 10, **dadurch gekennzeichnet, dass** die Einstelleinrichtung (81, 81') eine Fixiereinrichtung (77, 77') aufweist, die dazu dient, die eingestellte axiale Lage und Winkellage eines der Sensorelemente (54, 56) festzusetzen.

16. Feinmessgerät nach Anspruch 14, **dadurch gekennzeichnet, dass** die Fixiereinrichtung (77, 77') durch eine in dem Träger (74, 74') vorgesehene radiale Gewindebohrung (78, 78') und einen in der Gewindebohrung (78, 78') bis zur Außenseite eines zylindrischen Lagerfortsatzes (33, 73') einschraubbaren Gewindebolzen (79, 79') gebildet ist.

17. Feinmessgerät nach einem der Ansprüche 10 bis 17, **gekennzeichnet durch** eine Führungseinrichtung (59) mit den Merkmalen eines der Ansprüche 1 bis 9.

18. Feinmessgerät nach Anspruch 1, 10 oder 17, **dadurch gekennzeichnet, dass** eine eines der Sensorelemente (54, 56) lagernde Lagerhülse in Form einer Einschraubhülse (23) ausgebildet ist, die einen Abschnitt mit einem Innengewinde (22) aufweist, und dass die Messspindel (4) wenigstens abschnittsweise mit einem Außengewinde (21) versehen ist, das in das Innengewinde (22) eingreift.

19. Feinmessgerät nach Anspruch 1, 10 oder 17, **dadurch gekennzeichnet, dass** das feststehende Sensorelement (54) Teil eines Messsystems (51) mit einem Signalgebermittel und Signalaufnehmermittel und das bewegbare Sensorelement (56) durch ein Codiermittel gebildet ist.

20. Feinmessgerät nach Anspruch 1, 10 oder 17, **dadurch gekennzeichnet, dass** die Sensoreinrichtung (52) eine kapazitive Sensoreinrichtung ist.

21. Feinmessgerät nach Anspruch 1, 10 oder 17, **dadurch gekennzeichnet, dass** eine Auswerteinrichtung (53) vorgesehen ist, die die von der Sensoreinrichtung (52) gelieferten Messsignale auswertet und eine die axiale Verschiebung der Messspindel (4) kennzeichnende Messgröße liefert.

22. Feinmessgerät nach Anspruch 1, 10 oder 17, **dadurch gekennzeichnet, dass** eine Anzeigeeinrichtung (84) vorgesehen ist, um die axiale Verschiebung der Messspindel (4) nach außen wahrnehmbar anzuzeigen.
